# EUROPÄISCHE PATENTSCHRIFT

(11) **EP 3 144 615 B1**
(45) Veröffentlichungstag und Bekanntmachung des Hinweises auf die Patenterteilung: **01.01.2020**
(21) Anmeldenummer: 16179477.1
(22) Anmeldetag: 14.07.2016
(51) Int. Cl.: C01B 32/158, C01B 32/55

(54) **VERFAHREN UND VORRICHTUNG ZUM HERSTELLEN VON TROCKENEIS**
DEVICE AND METHOD FOR MANUFACTURING DRY ICE
PROCEDE ET DISPOSITIF DE FABRICATION DE GLACE SECHE

(30) Priorität: 17.07.2015 DE 102015009352
(43) Veröffentlichungstag der Anmeldung: 22.03.2017
(73) Patentinhaber: Messer Group GmbH, 65812 Bad Soden (DE)
(72) Erfinder: Böckler, Thomas, 40470 Düsseldorf (DE); Herzog, Dr. Friedhelm, 47803 Krefeld (DE); Hertrampf, Joachim, 49497 Mettingen (DE); Wacker, Dietmar, 57462 Olpe (DE)

(56) Entgegenhaltungen:
- EP-A1- 0 663 371
- US-A- 2 738 658
- US-A- 3 901 044
- US-A1- 2007 277 674
- DATABASE WPI Week 197949 Thomson Scientific, London, GB; AN 1979-88457B & JP S54 138891 A (TOHO GAS KK) 27 October 1979 (1979-10-27)

## Beschreibung

Die Erfindung betrifft ein Verfahren zum Herstellen von Trockeneis, bei dem flüssiges Kohlendioxid über eine Zuleitung in eine Reaktorkammer eingefüllt, an einer im wesentlichen die Außenfläche der Reaktorkammer umfassenden Wärmetauscherfläche in thermischen Kontakt mit einem kalten Wärmeträgerfluid auf eine Temperatur unterhalb seiner Schmelztemperatur gekühlt (Kühlphase) und dadurch zu einem Trockeneiskörper gefroren wird. Die Erfindung betrifft des Weiteren eine entsprechende Vorrichtung.

Üblicherweise erfolgt die Herstellung von festem Kohlendioxid (Trockeneis) dadurch, dass unter Druck stehendes Kohlendioxid im flüssigen Zustand an einer Düse entspannt wird. Bei der Entspannung entsteht eine Mischung aus Kohlendioxidschnee und gasförmigem Kohlendioxid. Das gasförmige Kohlendioxid wird vom Kohlendioxidschnee getrennt, und der Kohlendioxidschnee wird beispielsweise durch Pressen zu Blöcken, Scheiben oder Pellets verdichtet. Bekannt sind auch CO₂-Strahlgeräte, bei denen flüssiges Kohlendioxid unter hohem Druck herangeführt und an einer Strahldüse entspannt wird. Der bei der Entspannung entstehende Kohlendioxidschnee wird bei diesen Geräten als Partikelstrahl mit hoher Geschwindigkeit ausgetragen und beispielsweise zu Reinigungszwecken eingesetzt. Typischerweise wird bei den vorgenannten Gegenständen nur ein relativ geringer Teil, nämlich etwa 40% des flüssigen Kohlendioxids in Kohlendioxidschnee umgewandelt. Das gasförmige Kohlendioxid wird entweder ungenutzt in die Atmosphäre abgegeben oder aufgefangen und einer weiteren Verwendung zugeführt, bei der es beispielsweise erneut verflüssigt wird.

Es sind auch Verfahren und Vorrichtungen vorgeschlagen worden, bei denen in einem Druckbehälter (im Folgenden "Reaktorkammer" genannt) gespeichertes flüssiges Kohlendioxid durch Kontaktieren mit einem kalten Wärmeträgerfluid auf eine Temperatur unterhalb der Temperatur des Tripelpunkts -56,6°C (216,6 K) oder der Sublimationstemperatur von -78,4°C (194,75 K) abgekühlt und auf diese Weise verfestigt wird.

So wird beispielsweise in der US 3 901 044 B vorgeschlagen, flüssiges Kohlendioxid in einen aus parallelen Röhren aufgebauten Reaktor einzufüllen und durch Wärmekontakt mit einem kalten Wärmeträgerfluid auf eine Temperatur zwischen der Temperatur des Tripelpunkts und der Sublimationstemperatur unter atmosphärischen Bedingungen zu bringen, wobei der Druck im Reaktor zunächst auf einem Wert oberhalb des Atmosphärendrucks gehalten wird. Nach dem Gefrieren des Kohlendioxids wird der Druck in der Reaktorkammer auf Atmosphärendruck gesenkt, und das zu einem Trockeneiskörper gefrorene Kohlendioxid kann entnommen werden.

Aus der US 2 738 658 A ist ein Verfahren zur Abtrennung von Kohlendioxid aus einem Gasgemisch bekannt, bei dem das Kohlendioxid durch Wärmetausch mit einem tiefkalten Kühlmedium aus dem Gasgemisch ausgefroren und anschließend durch Erhöhung des Drucks über den Tripelpunkt des Kohlendioxids verflüssigt wird. Das verflüssigte Kohlendioxid wird anschließend aufgefangen und zur Erzeugung von Trockeneisblöcken verwendet.

Die US 2007/0277674 A1 betrifft ein Verfahren zur Behandlung von Abgasen, bei dem verschiedene im Abgas enthaltene Bestandteile, darunter Kohlendioxid, durch Abkühlen auf eine Temperatur der jeweiligen Erstarrungstemperatur ausgefroren werden. Das in einem Druckbehälter ausgefrorene Kohlendioxid wird anschließend auf einen Druck oberhalb seines Tripelpunktes gebracht, wodurch es sich verflüssigt und abgeführt werden kann.

Aus der JP S54 138891 A ist ein Verfahren zur Erzeugung von Trockeneis bekannt, bei dem gasförmiges Kohlendioxid in einem Wärmetauscher durch Wärmekontakt mit flüssigem Stickstoff unter seine Erstarrungstemperatur gebracht und somit zu einem Trockeneiskörper ausgefroren wird. Anschließend werden die Wände des Wärmetauschers beheizt, wodurch sich der Trockeneiskörper leicht vom Wärmetauscher ablösen lässt.

Aus der EP 0 663 371 A1 ist eine Vorrichtung zur kontinuierlichen Herstellung von Trockeneispellets bekannt. Dabei wird flüssiges Kohlendioxid einer aus langgestreckten Röhren aufgebauten Düsenanordnung zugeführt und in thermischen Kontakt mit flüssigem Stickstoff auf eine Temperatur unterhalb der Sublimationstemperatur von Kohlendioxid unter atmosphärischen Bedingungen von -78,4°C (194,75 K) gebracht. Durch den Kontakt mit dem Kältemittel gefriert das Kohlendioxid in den Röhren zu Trockeneis. Durch den Druck des nachströmenden flüssigen Kohlendioxids wird das verfestigte Kohlendioxid an den Ausmündungen der Röhren kontinuierlich extrudiert und anschließend zu Pellets zerhackt.

Aus der EP 2 301 891 A2 ist eine Vorrichtung zum Erzeugen fester Kohlendioxidpellets bekannt, bei der bis nahe an seinen Gefrierpunkt gekühltes Kohlendioxid kontinuierlich durch einen in mehrere Zonen abnehmender Temperatur unterteilten Wärmetauscher geführt wird. Während seines Durchlaufs durch den Wärmetauscher wird das Kohlendioxid sukzessive auf eine Temperatur unterhalb seines Gefrierpunkts abgekühlt und auf diese Weise schließlich verfestigt. Durch den Druck des nachfolgenden Kohlendioxids wird das entstandene Trockeneis an einer Mündungsöffnung des Wärmetauschers kontinuierlich ausgetragen und in Blöcke der gewünschten Größe zerteilt.

Problematisch bei den vorgenannten Gegenständen ist, neben dem hohen apparativen Aufwand, die Neigung des erzeugten Trockeneises, an den Röhren des Reaktors haften zu bleiben, wodurch die Effizienz des Verfahren reduziert wird. Zudem erfolgt die Wärmeübertragung auf das Kohlendioxid im Wärmetauscher nur sehr ungleichmäßig, wodurch eine zuverlässige Produktion von Kohlendioxidpellets nicht immer gewährleistet werden kann.

Aufgabe der Erfindung ist somit, ein Verfahren und eine Vorrichtung zur Herstellung von Trockeneis anzugeben, das bzw. die die Nachteile des Standes der Technik überwindet.

Gelöst ist diese Aufgabe durch ein Verfahren mit den Merkmalen des Patentanspruchs 1 sowie durch eine Vorrichtung mit den Merkmalen des Patentanspruchs 8.

Gemäß der Erfindung wird also zunächst flüssiges Kohlendioxid, das in einem Tank bei einem Druck von beispielsweise 20 bar gelagert wird, in die Reaktorkammer eingefüllt und anschließend durch Wärmekontakt mit einem Wärmeträgerfluid (im Folgenden "kaltes Wärmeträgerfluid" genannt) über die als Wärmetauscherfläche fungierende Außenfläche der Reaktorkammer gekühlt ("Kühlphase"). Als bevorzugtes Wärmeträgerfluid kommt insbesondere Sole, Wärmeträgeröl, Luft, ein Edelgas oder ein anderes Gas oder Gasgemisch zum Einsatz. In der Kühlphase wird das Kohlendioxid auf eine Oberflächentemperatur (im Folgenden "Zieltemperatur" genannt) unterhalb seiner Gefriertemperatur beim jeweils im Reaktor herrschenden Druck, beispielsweise auf einen Wert von -56,6°C bis -82°C (216,6K bis 194,15K), gekühlt und dadurch zu einem Trockeneiskörper gefroren. Nach dem Gefrieren des Kohlendioxids in der Reaktorkammer wird die Zuführung von kaltem Wärmeträgerfluid zur Wärmetauscherfläche eingestellt und stattdessen Wärmeträgerfluid zugeführt, dessen Temperatur höher ist als die Temperatur der Wärmetauscherfläche zu diesem Zeitpunkt - dieses Wärmeträgerfluid wird im Folgenden "warmes Wärmeträgerfluid" genannt ("Anwärmphase"). Dadurch erwärmt sich die Wärmetauscherfläche und die Haftung zwischen Trockeneiskörper und der Innenfläche der Reaktorkammer lässt nach. Die Zeitdauer der Anwärmphase und/oder die Temperatur des warmen Wärmeträgerfluids sind so bemessen, dass sich der Trockeneiskörper von der Innenoberfläche der Reaktorkammer löst und anschließend leicht aus der Reaktorkammer entfernt werden kann.

Während der Befüllung und der Kühlphase wird der Druck in der Reaktorkammer auf einem Wert oberhalb des Tripelpunkts von Kohlendioxid (5,18 bar) gehalten, um die Bildung von Kohlendioxidgas zu unterbinden. Erst unmittelbar vor, während oder nach der Anwärmphase wird der Druck in der Reaktorkammer auf Umgebungsdruck gesenkt. Der Druck in der Reaktorkammer bei der Einfüllung des flüssigen Kohlendioxids liegt bevorzugt knapp unter dem Einfülldruck des flüssigen Kohlendioxids, beispielsweise um höchstens 10 bis 1000 mbar unter dem Einfülldruck, und wird durch gasförmiges Kohlendioxid hergestellt oder durch ein Gas, dessen Kondensationstemperatur unterhalb der Gefriertemperatur von Kohlendioxid bei den in der Reaktorkammer während der Durchführung des Verfahrens herrschenden Drücken liegt, wie beispielsweise Luft, Stickstoff oder ein Edelgas.

Das auf diese Weise hergestellte Trockeneis weist eine große Härte auf und ist im Wesentlichen frei von Gaseinschlüssen. Es eignet sich daher besonders als Ausgangsprodukt zum Herstellen von Strahlkörpern (Trockeneispellets), wie sie zum Reinigen von Oberflächen zum Einsatz kommen.

Während der Kühlphase wird die gesamte Wärmetauscherfläche bevorzugt gleichmäßig mit kaltem Wärmeträgerfluid beaufschlagt, um Spannungen und die Bildung von Gasblasen innerhalb des Trockeneiskörpers zu vermeiden. "Gleichmäßig" bedeutet hier, dass die Kühlung durch das Wärmeträgerfluid derart erfolgt, dass die Temperatur über die gesamte Wärmetauscherfläche zu jedem Zeitpunkt der Kühlphase gleich ist oder nur geringfügig variiert; beispielsweise weichen die Temperaturen unterschiedlicher Bereiche der Wärmetauscherfläche zu einem Zeitpunkt während der Kühlphase um nicht mehr als 5K, bevorzugt nicht mehr als 3K voneinander ab. Dies wird beispielsweise durch eine spezielle Ausgestaltung der Wärmetauscherfläche bewirkt, die dafür sorgt, dass ein möglichst großer Bereich der Wärmetauscherfläche gleichzeitig mit kaltem Wärmeträgerfluid beaufschlagt wird, oder durch einen hinreichend großen Strom an Wärmeträgerfluid entlang der Wärmetauscherfläche.

Es ist im Rahmen des erfindungsgemäßen Verfahrens im Übrigen weder erforderlich noch erwünscht, die Wärmetauscherfläche sehr starken Temperaturschwankungen zu unterwerfen, da auch dies zu Spannungen innerhalb des Trockeneiskörpers führen kann. Bevorzugt weist das während der Kühlphase der Wärmetauscherfläche zugeführte kalte Wärmeträgerfluid eine Temperatur auf, die nur wenig, um beispielsweise 2K bis 10K unterhalb der Zieltemperatur des Kohlendioxids liegt. Die Temperatur des während der Anwärmphase zugeführten Wärmeträgerfluids liegt vorzugsweise unterhalb der Tripelpunkttemperatur von Kohlendioxid und ist ihrerseits bevorzugt nur um 2K bis 10K über der Zieltemperatur des Kohlendioxids in der Reaktorkammer. Die Temperaturdifferenz zwischen kaltem und warmem Wärmeträgerfluid beträgt also bevorzugt nicht mehr als 4 K bis 20 K. Demzufolge sind nur vergleichsweise geringe Kühl- bzw. Heizleistungen erforderlich, um das Wärmeträgerfluid entsprechend zu temperieren.

Eine vorteilhafte Ausgestaltung der Erfindung sieht vor, dass das flüssige Kohlendioxid in der Reaktorkammer beim Wärmekontakt mit dem kalten Wärmeträgerfluid auf eine Temperatur unterhalb der Sublimationstemperatur unter Atmosphärenbedingungen abgekühlt wird. In diesem Falle wird gewährleistet, dass bei der anschließenden Reduzierung des Drucks in der Reaktorkammer auf Umgebungsdruck die Bildung von Kohlendioxidgas unterdrückt wird.

In der Anwärmphase wird das Wärmeträgerfluid bevorzugt so lange zugeführt, bis die Oberfläche des Trockeneiskörpers über der Schmelztemperatur oder über der Sublimationstemperatur des Kohlendioxids liegt. Dadurch wird das Kohlendioxid in einer dünnen Zone an der Oberfläche des Trockeneiskörpers geschmolzen bzw. sublimiert, wodurch sich eine Trennschicht zwischen dem Trockeneiskörper und der Innenoberfläche der Reaktorkammer ausbildet, die die anschließende Entfernung des Trockeneiskörpers aus der Reaktorkammer wesentlich erleichtert.

Eine andere vorteilhafte Ausgestaltung der Erfindung sieht vor, dass die Wärmetauscherfläche durch das warme Wärmeträgerfluid auf eine Temperatur erwärmt wird, die ausreicht, dass sich der Trockeneiskörper aufgrund der Wärmeausdehnung der Reaktorkammer von den Wänden der Reaktorkammer löst. In diesem Fall ist es also nicht erforderlich - wenngleich auch nicht ausgeschlossen - dass während der Anwärmphase die Oberfläche des Trockeneiskörpers auf eine Temperatur oberhalb der Sublimations- oder der Schmelztemperatur erwärmt wird, sondern bereits dadurch, dass sich die Reaktorkammer durch die Erwärmung stärker ausdehnt als der in ihr befindliche Trockeneiskörper, wird die Haftung des Trockeneiskörpers an die Innenwand der Reaktorkammer so weit reduziert, dass sich der Trockeneiskörper leicht aus der Reaktorkammer ablösen lässt. Die dazu erforderliche, der Wärmetauscherfläche zuzuführende Wärmemenge wird zweckmäßigerweise für jede Reaktorkammer empirisch bestimmt oder mittels geeigneter Sensoren während der Zufuhr des Wärmeträgerfluids festgestellt.

Das kalte Wärmeträgerfluid und das warme Wärmeträgerfluid können im Übrigen aus unterschiedlichen Quellen zugeführt werden, die im Verlauf des Verfahrens jeweils abwechselnd zugeschaltet werden. Bevorzugt wird das Wärmeträgerfluid jedoch im Kreislauf geführt und abwechselnd einer entsprechenden Kühlung bzw. Heizung unterworfen, bevor es der Wärmetauscherfläche zugeführt wird. Im letztgenannten Fall erfolgt die Kühlung des Wärmeträgerfluids bevorzugt durch Wärmetausch mit einem kryogenen Kältemittel, beispielsweise flüssigem Stickstoff, oder durch konventionelle Kältemaschinen. Die Beheizung des Wärmeträgerfluids zum Aufwärmen der Wärmetauscherfläche in der Anwärmphase erfolgt bevorzugt mittels einer elektrischen Heizeinrichtung oder durch Wärmetausch mit einem wärmeren Medium, beispielsweise Luft oder Wasser.

Zur Verbesserung der Effizienz des Verfahrens ist es vorteilhaft, das flüssige Kohlendioxid vor seiner Zuführung an die Reaktorkammer auf eine Temperatur nahe dem Schmelzpunkt vorzukühlen, beispielsweise auf eine Temperatur zwischen -50°C und -55°C. Die Vorkühlung erfolgt beispielsweise durch thermischen Kontakt mit einem kryogenen Kältemittel, beispielsweise flüssigem Stickstoff oder wiederum durch eine konventionelle Kältemaschine.

Die Aufgabe der Erfindung wird auch durch eine Vorrichtung mit den Merkmalen des Anspruchs 8 gelöst.

Die erfindungsgemäße Vorrichtung umfasst eine druckfeste Reaktorkammer, die über eine Zuleitung mit einem Speichertank strömungsverbunden ist, in dem flüssiges Kohlendioxid unter einem Druck von beispielsweise 20 bar gelagert wird. Die Reaktorkammer ist beispielsweise rohrförmig aufgebaut und weist eine Mündungsöffnung auf, die mittels eines steuerbaren Schließelements geöffnet bzw. druckfest verschlossen werden kann. Die Außenfläche der Reaktorkammer ist so ausgebildet, dass sie zum wesentlichen Teil als Wärmetauscherfläche zum thermischen Kontaktieren mit einem aus einem Leitungsnetzwerk zugeführten Wärmeträgerfluid dienen kann. Erfindungsgemäß sind dem Leitungsnetzwerk Mittel zum Kühlen des der Wärmetauscherfläche zugeführten Wärmeträgerfluids und Mittel zum Erwärmen des der Wärmetauscherfläche zugeführten Wärmeträgerfluids zugeordnet.

Gemäß der Erfindung sind dem Leitungsnetzwerk also Mittel zum Temperieren des Wärmeträgerfluids zugeordnet, wobei die Mittel dazu dienen, das Wärmeträgerfluid wechselweise zu kühlen und zu erwärmen. Als "Kühlen" wird hier eine Kühlung des Wärmeträgerfluids auf eine Temperatur unterhalb der Zieltemperatur, auf die das Kohlendioxid in der Reaktorkammer gekühlt werden soll, insbesondere auf eine Temperatur unterhalb der Schmelztemperatur von Kohlendioxid beim jeweiligen Druck in der Reaktorkammer ("kaltes Wärmeträgerfluid"), verstanden. Als "Heizen" wird hier eine Erwärmung des Wärmeträgerfluids auf eine Temperatur oberhalb, insbesondere um 4K bis 20K oberhalb der Temperatur des kalten Wärmeträgerfluids verstanden ("warmes Wärmeträgerfluid"). Die Vorrichtung umfasst im Übrigen bevorzugt eine beispielsweise elektronische Steuereinrichtung, die nach einem vorgegebenen Programm oder in Abhängigkeit von gemessenen Werten, beispielsweise der Temperatur in der Reaktorkammer oder der Phasenzusammensetzung des Kohlendioxids in der Reaktorkammer, die wechselweise Zuschaltung der Mittel zum Kühlen und zum Heizen regelt.

Die Mittel zum Kühlen des Wärmeträgerfluids umfassen beispielsweise einen Wärmetauscher, an dem das Wärmeträgerfluid in thermischen Kontakt mit einem Kälteträger, beispielsweise flüssiger Stickstoff, gebracht wird, oder eine konventionelle Kältemaschine, beispielsweise eine Kompressionskältemaschine. Die Mittel zum Heizen des Wärmeträgerfluids beinhalten beispielsweise eine elektrische Heizung, einen Kollektor, bei der das Wärmeträgerfluid Energie aus Strahlung aufnimmt, oder einen Wärmetauscher, an dem das Wärmeträgerfluid in thermischen Kontakt mit einem gasförmigen oder flüssigen Wärmeträger, beispielsweise Wasser oder Luft gebracht und auf diese Weise beheizt wird.

Im Betrieb der Vorrichtung wird zunächst das Schließelement an der Mündungsöffnung verschlossen und die Reaktorkammer mit flüssigem Kohlendioxid befüllt. Anschließend wird das in der Reaktorkammer befindliche flüssige Kohlendioxid durch die Kühlung der Wärmetauscherfläche mit kaltem Wärmeträgerfluid zu einem Trockeneiskörper eingefroren (Kühlphase). Der Druck in der Reaktorkammer bleibt während der Kühlphase auf einem Wert oberhalb des Tripelpunktdrucks von Kohlendioxid. Hierzu kann die Reaktorkammer mit einer zweiten Gaszuführung ausgerüstet sein, mittels der ein Gas, beispielsweise Luft oder Stickstoff, mit entsprechenden Druck eingefüllt werden kann. Nach der Kühlphase wird die Zufuhr von kaltem Wärmeträgerfluid gestoppt und die Wärmetauscherfläche mit warmem Wärmeträgerfluid angewärmt (Anwärmphase). Unmittelbar vor, während oder nach der Anwärmphase wird der Druck in der Reaktionskammer auf Umgebungsdruck abgesenkt. Durch die Anwärmung der Wärmetauscherfläche löst sich der Trockeneiskörper von der Innenwand der Reaktorkammer und kann leicht aus dieser entfernt werden. Im Falle eines rohrförmigen Reaktors mit einer nach unten gerichteten Mündungsöffnung ist beispielsweise die Wärmezuführung während der Anwärmphase so gewählt, dass der Trockeneiskörper nach der Druckentlastung der Reaktorkammer und dem Öffnen des Schließelements unter der Wirkung der Schwerkraft aus der Reaktorkammer herausfällt und zur weiteren Verarbeitung, insbesondere zur Herstellung strahlfähiger Trockeneispartikel, abtransportiert werden kann.

Bevorzugt sind dabei Mittel zum gleichmäßigen Zuführen des Wärmeträgerfluids aus dem Leitungsnetzwerk an die Wärmetauscherfläche vorgesehen. Als "Mittel zum gleichmäßigen Zuführen des Wärmeträgerfluids" sollen hier solche Mittel verstanden werden, die gewährleisten, dass die gesamte Wärmetauscherfläche während einer Zuführung von Wärmeträgerfluid gleichmäßig gekühlt bzw. erwärmt wird, dass also zu jedem Zeitpunkt der Kühlphase und/oder der Anwärmphase unterschiedliche Bereiche der Wärmetauscherfläche die gleiche Temperatur oder nur geringfügig (um beispielsweise nicht mehr als 5K) voneinander abweichende Temperaturen aufweisen.

Bevorzugt ist die Wärmetauscherfläche auf ihrer vom Wärmeträgerfluid angeströmten Seite mit mehreren Kühlsegmenten thermisch verbunden, die jeweils mit unterschiedlichen Abschnitten der Wärmetauscherfläche in Wärmekontakt stehen. Als "Kühlsegmente" sollen hier ganz allgemein Leitungen, Kammern oder sonstige Hohlräume verstanden werden, die vom Wärmeträgerfluid durchströmt werden können. Die untereinander strömungstechnisch nicht unmittelbar verbundenen Kühlsegmente verfügen jeweils über eine Zuleitung und eine Ableitung für das Wärmeträgerfluid, mit denen sie mit dem Leitungsnetzwerk strömungsverbunden sind und werden daher im Einsatz parallel zueinander mit Wärmeträgerfluid aus dem Leitungsnetzwerk beströmt. Jedes der Kühlsegmente ist mit einem anderen Abschnitt der Wärmetauscherfläche thermisch verbunden, die dadurch gleichzeitig oder zumindest nahezu gleichzeitig mit Wärmeträgerfluid der jeweils gleichen Temperatur beaufschlagt werden. Auf diese Weise wird insgesamt eine sehr gleichmäßige Kühlung bzw. Erwärmung der gesamten Wärmetauscherfläche erzielt.

Vorteilhafterweise umfassen die Kühlsegmente dabei zwei auf der Außenfläche der Reaktorkammer spiralförmig verlaufende Leitungen, die derart mit dem Leitungsnetzwerk strömungsverbunden sind, dass sie gegenläufig vom Wärmeträgerfluid durchflossen werden. Bei dieser Ausgestaltung wird die Reaktorkammer also von gegenläufigen Strömen des Wärmeträgerfluids beaufschlagt. Die spiralförmigen Leitungen sind bevorzugt so auf der Oberfläche der Reaktorkammer angeordnet, dass sie unmittelbar aneinander angrenzen und bevorzugt die Außenfläche der Reaktorkammer vollständig überdecken. Andere Ausgestaltungen sehen in Längsrichtung der Reaktorkammer nebeneinander angeordnete spiralförmige Leitungen oder Kammern vor, die parallel zueinander mit Wärmeträgerfluid aus dem Leitungsnetzwerk beaufschlagt werden können.

Bevorzugt umfassen die Mittel zum Kühlen des Wärmeträgerfluids einen Kaltspeicher zum Bevorraten von Wärmeträgerfluid bei einer Temperatur unterhalb des Schmelzpunkts von Kohlendioxids. Ebenso bevorzugt umfassen die Mittel zum Heizen des Wärmeträgerfluids einen Warmspeicher zum Bevorraten von Wärmeträgerfluid bei eine Temperatur oberhalb der Temperatur des Wärmeträgerfluids im Kaltspeicher bzw. oberhalb der Temperatur des der Wärmetauscherfläche zugeführten kalten Wärmeträgerfluids. In dieser Ausgestaltung wird also im Betrieb der Vorrichtung beständig Wärmeträgerfluid bei den jeweiligen Temperaturen bereitgehalten und im Einsatzfall direkt der Wärmetauscherfläche zugeführt. In den Kaltspeicher kann dabei ein Wärmetauscher zum thermischen Kontaktieren mit einem Kältemittel und/oder im Warmspeicher eine beispielsweise elektrische Heizeinrichtung integriert sein, um das jeweils temperiert bevorratete Wärmeträgerfluid nach dem Einsatz schnell ergänzen zu können.

Um die Herstellung größerer Trockeneiskörper zu bewerkstelligen sieht eine vorteilhafte Ausgestaltung der erfindungsgemäßen Vorrichtung vor, dass die Reaktorkammer zumindest abschnittsweise rohrförmig ausgebildet ist und sich innerhalb der rohrförmigen Reaktorkammer eine sich koaxial zu dieser erstreckende zweite Wärmetauscherfläche vorgesehen ist. In diesem Fall wird also ein rohrförmiger Trockeneiskörper erzeugt. Der Abstand zwischen der zweiten, inneren Wärmetauscherfläche und der ersten, äußeren Wärmetauscherfläche beträgt bevorzugt zwischen 2 cm und 4 cm. Dadurch wird eine rasche und gleichmäßige Kühlung des Kohlendioxids erreicht.

Der zweiten Wärmetauscherfläche ist dabei vorzugsweise wenigstens eine mit dem Leitungsnetzwerk strömungsverbundene Kühlschlange zugeordnet, sie wird also gleichfalls durch das Wärmeträgerfluid temperiert. Bei kleineren Ausführungsformen ist die zweite Wärmetauscherfläche lediglich zum Kühlen des Kohlendioxids in der Reaktorkammer vorgesehen. Größere Ausführungsformen können neben der Kühlschlange zum Kühlen zusätzlich eine weitere, beispielsweise spiralförmig angeordnete Leitung zum Anwärmen der zweiten Wärmetauscherfläche aufweisen.

Bevorzugt sind die als Wärmetauscherflächen fungierenden Wände der Reaktorkammer, ebenso wie die vorgenannte innere Wärmetauscherfläche zumindest teilweise aus Aluminium gefertigt, das eine gute Wärmeleitung aufweist und dessen Ausdehnungseigenschaften in Abhängigkeit von der Temperatur die Ablösung des in der Reaktorkammer entstandenen Trockeneisblocks von den Wänden der Reaktorkammer begünstigt. Alternativ zu Aluminium kann jedoch auch beispielsweise Kupfer oder Edelstahl zum Einsatz kommen.

Das mit dem erfindungsgemäßen Verfahren bzw. der erfindungsgemäßen Vorrichtung hergestellte Trockeneis weist nur geringe Gaseinschlüsse auf und ist von hoher Dichte, Homogenität und Härte.

Anhand der Zeichnung soll ein Ausführungsbeispiel der Erfindung näher erläutert werden. In schematischen Ansichten zeigen:
- Fig. 1:: Das Schaltbild einer erfindungsgemäßen Vorrichtung zum Herstellen von Trockeneis und
- Fig. 2:: Die Reaktorkammer der Vorrichtung aus Fig. 1 im Längsschnitt.

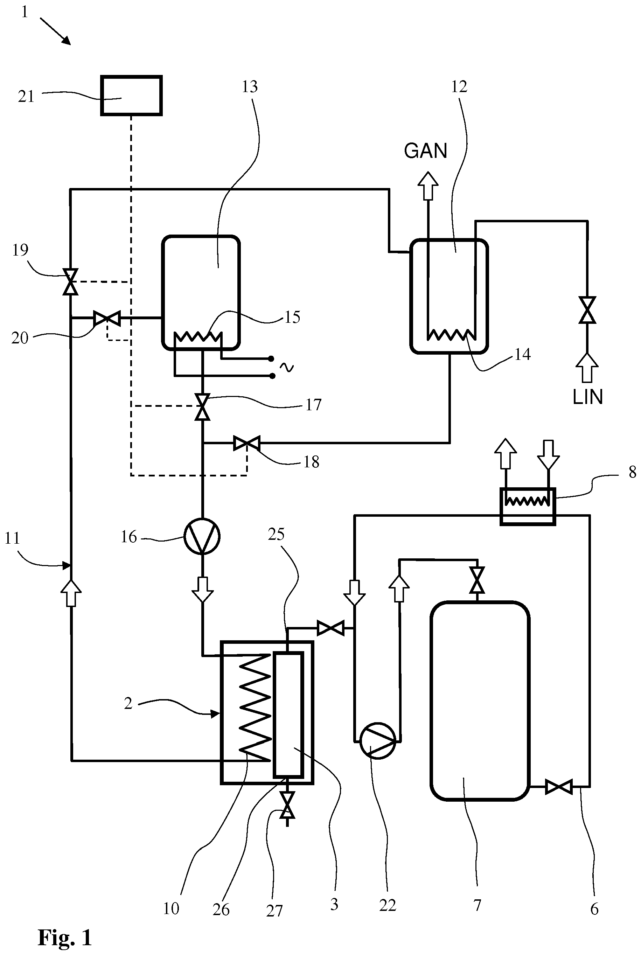

Die in Fig. 1 gezeigte Vorrichtung 1 umfasst einen Reaktor 2 mit einer unten näher beschriebenen Reaktorkammer 3, in die flüssiges Kohlendioxid unter Druck eingefüllt und anschließend durch Absenkung der Temperatur zumindest an seiner Oberfläche verfestigt wird. Zum Einfüllen von flüssigem Kohlendioxid ist die Reaktorkammer 3 mit einer druckfesten Zuleitung 6 strömungsverbunden, die wiederum an einen Tank 7 angeschlossen ist, in dem flüssiges Kohlendioxid unter einem Druck von beispielsweise 20 bar bevorratet wird. In der Zuleitung 6 ist weiterhin ein Vorkühler 8 integriert.

Die Außenwände der Reaktorkammer 3 bilden zumindest teilweise eine Wärmetauscherfläche 10 zum thermischen Kontaktieren mit einem Wärmeträgerfluid, beispielsweise Sole, Wärmeträgeröl oder ein Gas. Das Wärmeträgerfluid strömt in einem Leitungsnetzwerk 11, in dem neben der Wärmetauscherfläche 10 ein Kaltspeicher 12 und ein Warmspeicher 13 integriert sind. Beim Kaltspeicher 12 handelt es sich um einen thermisch gut isolierten Behälter, in dem Wärmeträgerfluid bei einer Temperatur unterhalb der Schmelztemperatur von Kohlendioxid, beispielsweise bei -57°C bis -90°C bevorratet wird. Zur laufenden Kühlung bzw. Ergänzung des kalten Wärmeträgerfluids ist im Kaltspeicher 12 eine Kühlschlange 14 angeordnet, die von einem Kälteträger, beispielsweise flüssiger Stickstoff (LIN) durchflossen wird, wobei beim Wärmetausch mit dem Wärmeträgerfluid im Kaltspeicher 12 der flüssige Stickstoff zu gasförmigem Stickstoff (GAN) verdampft. Alternativ kann das Wärmeträgerfluid im Kaltspeicher 12 jedoch auch mittels einer Kältemaschine, beispielsweise eine Kompressions-Kältemaschine, gekühlt werden.

Beim Warmspeicher 13 handelt es sich um einen thermisch gut isolierten Behälter, in dem Wärmeträgerfluid bei einer Temperatur bevorratet wird, die über der Temperatur im Kaltspeicher 12 liegt. Die Temperatur des Wärmeträgerfluids im Warmspeicher 13 beträgt beispielsweise -55°C bis -75°C. Zum Erwärmen des Wärmeträgerfluids auf diesen Wert ist der Warmspeicher 13 mit einer Heizung 15, beispielsweise mit einer elektrischen Heizeinrichtung, ausgerüstet.

Das Wärmeträgerfluid wird mittels einer Pumpe 16 zur Wärmetauscherfläche 10 geleitet. Mittels Ventilen 17, 18, 19, 20, die von einer Steuereinrichtung 21 angesteuert werden, werden Kaltspeicher 12 und Warmspeicher 13 wechselweise dem Leitungsnetzwerk 11 zugeschaltet oder von diesem strömungstechnisch getrennt und dadurch die Wärmetauscherfläche 10 entsprechend temperiert.

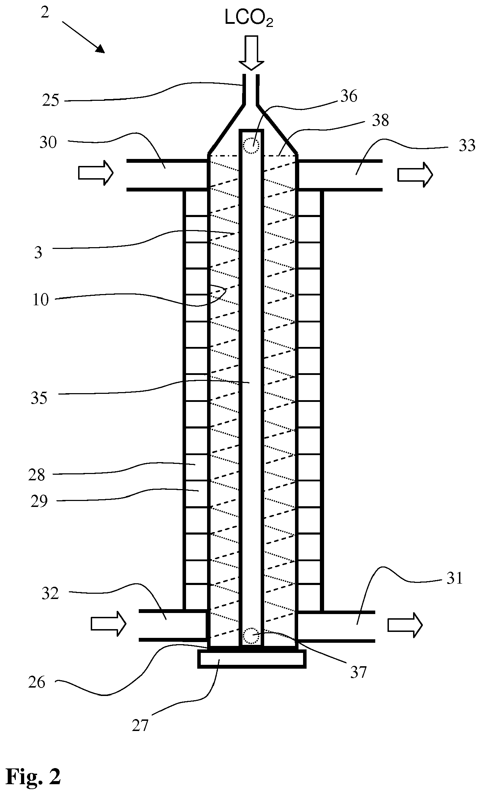

In Fig. 2 ist ein Beispiel für einen Reaktor 2 zum Einfrieren von Kohlendioxid gezeigt. Der in Fig. 2 gezeigte Reaktor 2 umfasst eine rohrförmige, druckfest ausgebildete Reaktorkammer 3, in die eine Zuführung 25 für flüssiges Kohlendioxid einmündet. Die Zuführung 25 ist an die Zuleitung 6 (Fig. 1) und damit an den Tank 7 angeschlossen. An ihrer von der Zuführung 25 entgegengesetzten Stirnseite weist die Reaktorkammer 3 eine nach unten gerichtete Mündungsöffnung 26 auf, die mit einer Schließeinrichtung 27 geöffnet und druckfest geschlossen werden kann.

Die beispielsweise ganz oder teilweise aus Aluminium gefertigte Mantelfläche der Reaktorkammer 3 dient als Wärmetauscherfläche 10 zum Kontaktieren mit Wärmeträgerfluid, das aus dem Leitungsnetzwerk 11 herangeführt wird und gegenläufig durch zwei parallel zueinander entlang der Oberfläche der Reaktorkammer 3 angeordneten spiralförmige Leitungen 28, 29 geführt wird. Die Leitung 28 ist dazu über eine im oberen Bereich der Reaktorkammer 3 angeordnete Zuleitung 30 für das Wärmeträgerfluid an das Leitungsnetzwerk 11 angeschlossen und mündet am Bereich der Mündungsöffnung 26 der Reaktorkammer 3 in einer Ausleitung 31 aus, die in das Leitungsnetzwerk 11 zurückführt, während das Wärmeträgerfluid in die Leitung 29 aus dem Leitungsnetzwerk 11 über eine im Bereich der Mündungsöffnung 26 angeordnete Zuleitung 32 eintritt und die Leitung 29 im oberen Bereich der Reaktorkammer 3 an einer Ausleitung 33 verlässt, die ihrerseits in das Leitungsnetzwerk 11 zurückführt.

Im Innern der Reaktorkammer 3 befindet sich im Ausführungsbeispiel nach Fig. 2 eine zweite Wärmetauscherfläche 35 in Form eines koaxial innerhalb der Reaktorkammer 3 angeordneten Rohres. Auch die zweite Wärmetauscherfläche 35 ist über eine Zuführung 36 und eine Ausleitung 37 mit dem Leitungsnetzwerk 11 strömungsverbunden.

Beim Betrieb der Vorrichtung 1 wird zunächst flüssiges Kohlendioxid aus dem Tank 7 durch den Vorkühler 8 geleitet und dort auf eine Temperatur, die nur geringfügig, beispielsweise 5 K bis 10 K über seiner Schmelztemperatur liegt, abgekühlt und anschließend in die Reaktorkammer 3 bis zu einer Füllhöhe 38 eingefüllt. Es empfiehlt sich, dass in der Reaktorkammer 3 vor dem Einfüllen des Kohlendioxids einen Druck herrscht, der oberhalb des Tripelpunktsdrucks von Kohlendioxids liegt. Um den Druck in der Reaktorkammer 3 auf einem Wert oberhalb des Tripelpunktdrucks von Kohlendioxid zu halten, wird auch in der nun folgenden Kühlphase eine Strömungsverbindung zwischen Reaktorkammer 3 und der Leitung 6 aufrecht erhalten. Alternativ kann der Druck in der Reaktorkammer 3 auch durch ein weiteres Gas, beispielsweise Stickstoff, hergestellt werden, das über eine hier nicht gezeigte Zuleitung in die Reaktorkammer 3 eingefüllt wird.

Nicht in die Reaktorkammer 3 gefülltes Kohlendioxid wird mittels einer Pumpe 22 in den Tank 7 zurückgeführt, um das flüssige Kohlendioxid im Tank 7 auf niedriger Temperatur zu halten.

Das in die Reaktorkammer 3 eingefüllte flüssige Kohlendioxid wird anschließend auf eine Temperatur unterhalb seines Schmelzpunkts abgekühlt und dadurch zur Erstarrung gebracht. Dazu wird Wärmeträgerfluid aus dem Kaltspeicher 12 zur Wärmetauscherfläche 10 geleitet und mit dem flüssigen Kohlendioxid in der Reaktorkammer 3 in Wärmekontakt gebracht. Im Beispiel des in Fig. 2 gezeigten Reaktors 2 erfolgt dies durch eine gleichzeitige, jedoch gegenläufige Zuführung des Wärmeträgerfluids durch die Leitungen 28, 29. Durch die gegenläufige Strömungsführung des Wärmeträgerfluids in den Leitungen 28, 29 wird die Wärmetauscherfläche sehr gleichmäßig gekühlt bzw. erwärmt und dadurch Spannungen oder Gasbildungen in dem sich in der Reaktorkammer bildenden Trockeneiskörper vermieden. Der Kühlvorgang wird unterstützt, indem gleichzeitig Wärmträgerfluid aus dem Leitungsnetzwerk 11 über die Zuleitung 36 der zweiten Wärmetauscherfläche 35 zugeführt wird.

Das beim Wärmetausch erwärmte Wärmeträgerfluid wird durch entsprechende Stellung der Ventile 19, 20 in den Warmspeicher 13 geleitet und trägt dort zur Temperierung des Wärmeträgerfluids bei. An den Wärmetauscherflächen 10, 35 wird der Wärmekontakt des kalten Wärmeträgerfluids aus dem Kaltspeicher 12 mit dem flüssigen Kohlendioxid in der Reaktorkammer 3 so lange aufrecht erhalten, bis das flüssige Kohlendioxid zu einem Trockeneiskörper gefroren ist und der Trockeneiskörper auf seiner Oberfläche eine vorgegebene Zieltemperatur erreicht hat (Kühlphase). Die Zeitdauer bis zum Erreichen der Zieltemperatur wird beispielsweise für eine Vorrichtung jeweils empirisch bestimmt, oder das Erreichen der Zieltemperatur wird mittels eines in der Reaktorkammer angeordneten und mit der Steuerung 21 datenverbundenen Temperatursensors (hier nicht gezeigt) detektiert. Im Anschluss daran wird durch entsprechendes Stellen der Ventile 17, 18 die Strömungsverbindung vom Kaltspeicher 12 zu den Wärmetauscherflächen 10, 35 unterbrochen und eine Strömungsverbindung vom Warmspeicher 13 zur Wärmetauscherfläche 10 und ggf. zur Wärmetauscherfläche 35 geöffnet. Dadurch strömt Wärmeträgerfluid aus dem Warmspeicher 13 zur Wärmetauscherfläche 10 und ggf. zur Wärmetauscherfläche 35 und anschließend, nach entsprechender Stellung der Ventile 19, 20, in den Kaltspeicher 12. Der Wärmekontakt mit dem warmen Wärmeträgerfluid aus dem Warmspeicher 13 führt zum Aufwärmen der Wärmetauscherfläche 10, beispielsweise auf eine Temperatur oberhalb der Temperatur an der Oberfläche des Trockeneiskörpers (Anwärmphase). Unmittelbar vor, während oder nach der Anwärmphase wird die Schließeinrichtung 27 an der Mündungsöffnung 26 der Reaktorkammer 3 geöffnet, woraufhin der Druck in der Reaktorkammer 3 auf Umgebungsdruck abfällt.

Liegt die Zieltemperatur nahe bei oder über der Sublimationstemperatur, sublimiert durch den Wärmekontakt des Trockeneiskörpers mit der angewärmten Wärmetauscherfläche eine dünne Oberflächenschicht auf dem in der Reaktorkammer 3 befindlichen Trockeneiskörper. Liegt die Zieltemperatur nahe bei der Schmelztemperatur des Kohlendioxids und wird die Wärmetauscherfläche 10 durch die Zuführung des warmen Wärmeträgerfluids auf eine Temperatur oberhalb der Schmelztemperatur gebracht, wird der Trockeneiskörper angetaut, wobei das flüssige Kohlendioxid unmittelbar nach Druckabfall in der Reaktorkammer 3 teilweise verdampft. Das verdampfte Kohlendioxid sorgt für eine dünne Trennschicht zwischen Trockeneiskörper und der Innenwand der Reaktorkammer 3. In jedem Fall jedoch führt die Erwärmung der Wärmetauscherfläche 10 durch das warme Wärmeträgerfluid dazu, dass sich die Reaktorkammer 3 stärker und/oder rascher als der Trockeneiskörper ausdehnt und dieser sich von der Innenwand der Reaktorkammer 3 ablöst. Dies sorgt dafür, dass nach Öffnen der Schließeinrichtung 27 der Trockeneiskörper ohne nennenswerten Reibungswiderstand unter der Wirkung der Schwerkraft aus der Reaktorkammer 3 hinausgleitet. Anschließend wird das Schließelement 27 wieder in Sperrposition gebracht, die Strömungsverbindung der Wärmetauscherfläche 10 zum Warmspeicher 13 geschlossen und die zum Kaltspeicher 12 geöffnet. Die Reaktorkammer 3 kann dann erneut mit flüssigem Kohlendioxid befüllt werden.

Die Ansteuerung des Schließelements 27, ebenso wie die Bestimmung der zeitlichen Dauer der Kühlphase und der Anwärmphase entsprechend einer vorgegebenen Zieltemperatur und/oder der Heizung bzw. Kühlung durch die Einrichtungen 14, 15 erfolgt ebenfalls durch die Steuereinrichtung 21 nach einen vorgegebenen Programm und/oder in Abhängigkeit von gemessenen Werten, wie beispielsweise der Temperatur oder der Phasenzusammensetzung des Kohlendioxids in der Reaktorkammer 3.

### Bezugszeichenliste

- 1.: Vorrichtung
- 2.: Reaktor
- 3.: Reaktorkammer
- 4.: -
- 5.: -
- 6.: Zuleitung
- 7.: Tank
- 8.: Vorkühler
- 9.: -
- 10.: Wärmetauscherfläche
- 11.: Leitungsnetzwerk
- 12.: Kaltspeicher
- 13.: Warmspeicher
- 14.: Kühlschlange
- 15.: Heizung
- 16.: Pumpe
- 17.: Ventil
- 18.: Ventil
- 19.: Ventil
- 20.: Ventil
- 21.: Steuereinrichtung
- 22.: Pumpe
- 23.: -
- 24.: -
- 25.: Zuführung für flüssiges Kohlendioxid
- 26.: Mündungsöffnung
- 27.: Schließeinrichtung
- 28.: Leitung
- 29.: Leitung
- 30.: Zuleitung
- 31.: Ausleitung
- 32.: Zuleitung
- 33.: Ausleitung
- 34.: -
- 35.: (zweite) Wärmetauscherfläche
- 36.: Zuleitung
- 37.: Ausleitung
- 38.: Füllhöhe

## Patentansprüche

1. Verfahren zum Herstellen von Trockeneis, bei dem flüssiges Kohlendioxid über eine Zuleitung (25) in eine Reaktorkammer (3) eingefüllt, an einer im wesentlichen die Außenfläche der Reaktorkammer (3) umfassenden Wärmetauscherfläche (10) in thermischen Kontakt mit einem kalten Wärmeträgerfluid auf eine Temperatur unterhalb seiner Schmelztemperatur gekühlt (Kühlphase) und dadurch zu einem Trockeneiskörper gefroren wird, **dadurch gekennzeichnet,**
**dass** während der Befüllung und der Kühlphase der Druck in der Reaktorkammer (3) auf einem Wert oberhalb des Tripelpunkts von Kohlendioxid gehalten wird und, nach dem Gefrieren des Kohlendioxids in der Reaktorkammer (3), die Zuführung von kaltem Wärmeträgerfluid zur Wärmetauscherfläche (10) eingestellt und die Wärmetauscherfläche (10) durch Zuführen von warmem Wärmeträgerfluid angewärmt wird und der Trockeneiskörper anschließend aus der Reaktorkammer (3) entfernt wird.

2. Verfahren nach Anspruch 1, **dadurch gekennzeichnet, dass** zum Gefrieren des Kohledioxids in der Reaktorkammer (3) die Wärmetauscherfläche (10) gleichmäßig mit kaltem Wärmeträgerfluid beaufschlagt wird.

3. Verfahren nach Anspruch 1 oder 2, **dadurch gekennzeichnet, dass** das flüssige Kohlendioxid in der Reaktorkammer (3) beim thermischen Kontakt mit dem kalten Wärmeträgerfluid auf eine Temperatur unterhalb der Sublimationstemperatur von Kohlendioxid unter Atmosphärenbedingungen gekühlt wird.

4. Verfahren nach einem der vorhergehenden Ansprüche, **dadurch gekennzeichnet, dass** die Wärmetauscherfläche (10) durch das warme Wärmeträgerfluid auf eine Temperatur oberhalb seiner Sublimationstemperatur oder auf eine Temperatur oberhalb seiner Schmelztemperatur erwärmt wird.

5. Verfahren nach einem der vorhergehenden Ansprüche, **dadurch gekennzeichnet, dass** die Wärmetauscherfläche (10) durch das warme Wärmeträgerfluid auf eine Temperatur erwärmt wird, die ausreicht, dass sich aufgrund der Wärmeausdehnung der Reaktorkammer (3) der Trockeneiskörper von den Wänden der Reaktorkammer (3) löst.

6. Verfahren nach einem der vorhergehenden Ansprüche, **dadurch gekennzeichnet, dass** die Temperaturdifferenz zwischen dem kalten Wärmeträgerfluid und dem warmen Wärmeträgerfluid zwischen 4K und 20K beträgt.

7. Verfahren nach einem der vorhergehenden Ansprüche, **dadurch gekennzeichnet, dass** das flüssige Kohlendioxid in einer Vorkühleinrichtung (8) vor dem Einfüllen in die Reaktorkammer (3) auf eine Temperatur nahe seiner Schmelztemperatur vorgekühlt wird.

8. Vorrichtung zum Herstellen von Trockeneis, mit einer mit einer Zuleitung für flüssiges Kohlendioxid ausgerüsteten druckfesten Reaktorkammer (3), die eine mit einem Schließelement (27) verschließbare Mündungsöffnung (26) aufweist und deren Außenwand zum wesentlichen Teil als Wärmetauscherfläche (10) zum thermischen Kontaktieren mit einem aus einem Leitungsnetzwerk (11) zugeführten Wärmeträgerfluid ausgebildet ist,
**dadurch gekennzeichnet,**
**dass** dem Leitungsnetzwerk (11) Mittel (12,13,14,15) zum Kühlen und zum Heizen des der Wärmetauscherfläche (10) zuzuführenden Wärmeträgerfluids zugeordnet sind.

9. Vorrichtung nach Anspruch 8, **dadurch gekennzeichnet, dass** die Wärmetauscherfläche (10) wärmeträgerfluidseitig mit mehreren Kühlsegmenten strömungsverbunden ist, die jeweils mit unterschiedlichen Abschnitten der Wärmetauscherfläche (10) thermisch verbunden und über parallele Zuleitungen (30, 32) mit dem Leitungsnetzwerk (11) strömungsverbunden sind.

10. Vorrichtung nach Anspruch 9, **dadurch gekennzeichnet, dass** die Kühlsegmente zwei auf der Außenfläche der Reaktorkammer (3) spiralförmig verlaufende Leitungen (28, 29) umfassen, die derart mit dem Leitungsnetzwerk (11) strömungsverbunden sind, dass sie gegenläufig vom Wärmeträgerfluid durchflossen werden.

11. Vorrichtung nach einem der Ansprüche 8 bis 10, **dadurch gekennzeichnet, dass** die Mittel (12, 14) zum Kühlen des Wärmeträgerfluids einen Kaltspeicher (12) zum Bevorraten von Wärmeträgerfluid bei einer Temperatur unterhalb der Schmelztemperatur von Kohlendioxid und/oder die Mittel (13, 15) zum Heizen des Wärmeträgerfluids einen Warmspeicher (13) zum Bevorraten von Wärmeträgerfluid bei einer Temperatur oberhalb der Temperatur des zum Kühlen des flüssigen Kohlendioxids bestimmten kalten Wärmeträgerfluids umfasst/umfassen.

12. Vorrichtung nach einem der Ansprüche 8 bis 11, **dadurch gekennzeichnet, dass** die Reaktorkammer (3) zumindest abschnittsweise rohrförmig ausgebildet ist und innerhalb des rohrförmigen Abschnitts der Reaktorkammer (3) eine sich koaxial zu dieser erstreckende zweite Wärmetauscherfläche (35) vorgesehen ist.

13. Vorrichtung nach Anspruch 8 bis 12, **dadurch gekennzeichnet, dass** die als Wärmetauscherflächen fungierenden Wände der Reaktorkammer (3) zumindest teileweise aus Aluminium, Kupfer oder Edelstahl gefertigt sind.

## Claims

1. Method for producing dry ice, in which liquid carbon dioxide is introduced via feed conduit (25) into a reactor chamber (3), cooled in thermal contact with a cold heat transfer fluid to a temperature below its melting point at a heat exchanger surface (10) comprising essentially the outer surface of the reactor chamber (3) (cooling phase) and thereby frozen to give a dry ice body,
**characterized in that**
the pressure in the reactor chamber (3) is maintained at a value above the triple point of carbon dioxide during charging and the cooling phase and, after freezing of the carbon dioxide in the reactor chamber (3), the supply of cold heat transfer fluid to the heat exchanger surface (10) is stopped and the heat exchanger surface (10) is warmed by supplying warm heat transfer fluid and the dry ice body is subsequently removed from the reactor chamber (3).

2. Method according to Claim 1, **characterized in that** the heat exchanger surface (10) is uniformly supplied with cold heat transfer fluid in order to freeze the carbon dioxide in the reactor chamber (3).

3. Method according to Claim 1 or 2, **characterized in that** the liquid carbon dioxide in the reactor chamber (3) is cooled during thermal contact with the cold heat transfer fluid to a temperature below the sublimation temperature of carbon dioxide under atmospheric conditions.

4. Method according to any of the preceding claims,
**characterized in that** the heat exchanger surface (10) is warmed by the warm heat transfer fluid to a temperature above its sublimation temperature or to a temperature above its melting point.

5. Method according to any of the preceding claims,
**characterized in that** the heat exchanger surface (10) is warmed by the warm heat transfer fluid to a temperature which is sufficient for the dry ice body to become detached from the walls of the reactor chamber (3) as a result of the thermal expansion of the reactor chamber (3).

6. Method according to any of the preceding claims,
**characterized in that** the temperature difference between the cold heat transfer fluid and the warm heat transfer fluid is in the range from 4 K to 20 K.

7. Method according to any of the preceding claims,
**characterized in that** the liquid carbon dioxide is precooled to a temperature close to its melting point in a precooling device (8) before introduction into the reaction chamber (3).

8. Apparatus for producing dry ice, comprising a pressure-rated reactor chamber (3) equipped with a feed conduit for liquid carbon dioxide, which has an inlet opening (26), which can be closed by means of a closure element (27), and whose outer wall is largely configured as heat exchanger surface (10) for thermal contacting with a heat transfer fluid supplied from a conduit network (11),
**characterized in that**
means (12, 13, 14, 15) for cooling and heating the heat transfer fluid to be supplied to the heat exchanger surface (10) are assigned to the conduit network (11).

9. Apparatus according to Claim 8, **characterized in that** the heat exchanger surface (10) is fluidically connected on the heat transfer fluid side to a plurality of cooling segments which are each thermally connected to different sections of the heat exchanger surface (10) and fluidically connected via parallel feed conduits (30, 32) to the conduit network (11).

10. Apparatus according to Claim 9, **characterized in that** the cooling segments comprise two conduits (28, 29) which run helically around the outer surface of the reactor chamber (3) and are fluidically connected to the conduit network (11) in such a way that the heat transfer fluid flows through them in countercurrent.

11. Apparatus according to any of Claims 8 to 10, **characterized in that** the means (12, 14) for cooling the heat transfer fluid comprises/comprise a cold storage (12) for stocking heat transfer fluid at a temperature below the melting point of carbon dioxide and/or the means (13, 15) for heating the heat transfer fluid comprises/comprise a heat storage (13) for stocking heat transfer fluid at a temperature above the temperature of the cold heat transfer fluid intended for cooling the liquid carbon dioxide.

12. Apparatus according to any of Claims 8 to 11, **characterized in that** the reactor chamber (3) is tubular at least in sections and within the tubular section of the reactor chamber (3) there is a second heat exchanger surface (35) extending coaxially to this.

13. Apparatus according to any of Claims 8 to 12,
**characterized in that** the walls of the reactor chamber (3) which function as heat exchanger surfaces are made at least partly of aluminium, copper or stainless steel.

## Revendications

1. Procédé de fabrication de glace sèche, selon lequel une chambre de réacteur (3) est remplie avec du dioxyde de carbone liquide par une conduite d'alimentation (25), celui-ci est refroidi sur une surface d'échange de chaleur (10) comprenant essentiellement la surface extérieure de la chambre de réacteur (3), en contact thermique avec un fluide caloporteur froid, à une température inférieure à sa température de fusion (phase de refroidissement), et ainsi congelé en un corps de glace sèche, **caractérisé en ce que**
pendant le remplissage et la phase de refroidissement, la pression dans la chambre de réacteur (3) est maintenue à une valeur supérieure au point triple du dioxyde de carbone et, après la congélation du dioxyde de carbone dans la chambre de réacteur (3), l'alimentation de la surface d'échange de chaleur (10) en fluide caloporteur froid est cessée et la surface d'échange de chaleur (10) est chauffée par alimentation avec un fluide caloporteur chaud, puis le corps de glace sèche est sorti de la chambre de réacteur (3).

2. Procédé selon la revendication 1, **caractérisé en ce que**, pour la congélation du dioxyde de carbone dans la chambre de réacteur (3), la surface d'échange de chaleur (10) est chargée de manière uniforme avec le fluide caloporteur froid.

3. Procédé selon la revendication 1 ou 2, **caractérisé en ce que** le dioxyde de carbone liquide est refroidi dans la chambre de réacteur (3) lors du contact thermique avec le fluide caloporteur froid à une température inférieure à la température de sublimation du dioxyde de carbone en conditions atmosphériques.

4. Procédé selon l'une quelconque des revendications précédentes, **caractérisé en ce que** la surface d'échange de chaleur (10) est chauffée par le fluide caloporteur chaud à une température supérieure à sa température de sublimation ou à une température supérieure à sa température de fusion.

5. Procédé selon l'une quelconque des revendications précédentes, **caractérisé en ce que** la surface d'échange de chaleur (10) est chauffée par le fluide caloporteur chaud à une température qui est suffisante pour que le corps de glace sèche se détache des parois de la chambre de réacteur (3) en raison de l'expansion thermique de la chambre de réacteur (3).

6. Procédé selon l'une quelconque des revendications précédentes, **caractérisé en ce que** la différence de température entre le fluide caloporteur froid et le fluide caloporteur chaud est comprise entre 4 K et 20 K.

7. Procédé selon l'une quelconque des revendications précédentes, **caractérisé en ce que** le dioxyde de carbone liquide est pré-refroidi à une température proche de sa température de fusion dans un dispositif de pré-refroidissement (8) avant le remplissage dans la chambre de réacteur (3).

8. Dispositif pour la fabrication de glace sèche, comprenant une chambre de réacteur (3) résistante à la pression, équipée d'une conduite d'alimentation pour le dioxyde de carbone liquide, qui comprend une embouchure (26) pouvant être fermée avec un élément de fermeture (27), et dont la paroi extérieure est configurée en majeure partie sous la forme d'une surface d'échange de chaleur (10) pour le contact thermique avec un fluide caloporteur alimenté à partir d'un réseau de conduites (11), **caractérisé en ce que**
des moyens (12, 13, 14, 15) pour le refroidissement et pour le chauffage du fluide caloporteur avec lequel la surface d'échange de chaleur (10) est alimentée sont attribués au réseau de conduites (11).

9. Dispositif selon la revendication 8, **caractérisé en ce que** la surface d'échange de chaleur (10) est en communication fluidique du côté du fluide caloporteur avec plusieurs segments de refroidissement, qui sont chacun raccordés thermiquement avec différentes sections de la surface d'échange de chaleur (10) et qui sont en communication fluidique par des conduites d'alimentation parallèles (30, 32) avec le réseau de conduites (11).

10. Dispositif selon la revendication 9, **caractérisé en ce que** les segments de refroidissement comprennent deux conduites (28, 29) agencées en spirale sur la surface extérieure de la chambre de réacteur (3), qui sont en communication fluidique avec le réseau de conduites (11) de telle sorte qu'elles sont traversées en sens opposé par le fluide caloporteur.

11. Dispositif selon l'une quelconque des revendications 8 à 10, **caractérisé en ce que** les moyens (12, 14) pour le refroidissement du fluide caloporteur comprennent un accumulateur de froid (12) pour le stockage du fluide caloporteur à une température inférieure à la température de fusion du dioxyde de carbone et/ou les moyens (13, 15) pour le chauffage du fluide caloporteur comprennent un accumulateur de chaleur (13) pour le stockage du fluide caloporteur à une température supérieure à la température du fluide caloporteur froid destiné au refroidissement du dioxyde de carbone liquide.

12. Dispositif selon l'une quelconque des revendications 8 à 11, **caractérisé en ce que** la chambre de réacteur (3) est configurée au moins en sections sous forme tubulaire, et une deuxième surface d'échange de chaleur (35) est prévue à l'intérieur de la section tubulaire de la chambre de réacteur (3), et s'étend coaxialement à celle-ci.

13. Dispositif selon les revendications 8 à 12, **caractérisé en ce que** les parois de la chambre de réacteur (3) servant de surfaces d'échange de chaleur sont au moins partiellement constituées par de l'aluminium, du cuivre ou de l'acier inoxydable.
